# EUROPEAN PATENT SPECIFICATION

(11) **EP 4 163 419 B1**
(45) Date of publication and mention of the grant of the patent: **03.07.2024**
(21) Application number: 22199287.8
(22) Date of filing: 30.09.2022
(51) Int. Cl.: C25C 3/08, C04B 35/532

(54) **ENVIRONMENT FRIENDLY COLD RAMMING MIXTURE**
UMWELTFREUNDLICHE KALTRAMMMISCHUNG
MÉLANGE DE FRAPPE À FROID RESPECTUEUX DE L'ENVIRONNEMENT

(30) Priority: 07.10.2021 IN 202121048814
(43) Date of publication of application: 12.04.2023
(73) Proprietor: Hindalco Industries Limited, Mumbai, Maharashtra 400 093 (IN)
(72) Inventor: GHOSH, Dipankar, 590010 Belgaum (IN); PATIL, Naganagouda R., 590010 Belgaum (IN); KUMBAR, Basavaraj U., 590010 Belgaum (IN); DEVALE, Pramod P., 590010 Belgaum (IN); KAPURI, Nageswar, 590010 Belgaum (IN)
(74) Representative: Barker Brettell LLP

(56) References cited:
- CN-A- 1 552 788
- CN-A- 102 010 202
- US-A- 3 381 823
- ETERIGHO-IKELEGBE OREVAOGHENE ET AL: "Coal as a Filler in Polymer Composites: A Review", RESOURCES, CONSERVATION AND RECYCLING, vol. 174, 28 June 2021 (2021-06-28), page 105756, XP093023470, AMSTERDAM, NL ISSN: 0921-3449, DOI: 10.1016/j.resconrec.2021.105756

## Description

### FIELD OF THE INVENTION

The invention relates to an eco-friendly cold tamping/ramming paste for electrolytic pot cells.

### BACKGROUND OF THE INVENTION

During production of aluminium by the electrolytic reduction of alumina in a cell, the cathode of the electrolytic pot is a large tank lined with carbon. Carbon blocks with steel electrodes embedded in them form the bottom of the pot and are spaced with uniform gap for ramming a seam. Conventionally this ramming paste is made up of a graded aggregate of calcined anthracite with a mixture of coal tar pitch.

The ramming paste plays a fundamental role in the life of an electrolysis cell and its energy efficiency. Ramming paste plays an important role in the electrolysis pot, ensuring pot tightness regarding metal infiltration at the block/paste interface. On the one hand, it prevents the infiltration of liquid aluminium into the cell and, on the other hand, it seals the cathode blocks, which protect them from damage and ultimately from failure.

The main purpose of the ramming paste, both in the joints between the cathode blocks and in the peripheral seam, is to fill the voids between the prebaked blocks and prevent metal and bath from penetrating the cathode. Leakage of metal and electrolyte damages the cathode and may lead to premature pot failure. Ramming paste is a critical part of the cathode. High quality ramming paste are installed in cathode to improved operation and longer pot life.

Ramming pastes are usually made of coal tar pitch and anthracene oil based binder. This coal tar pitch based ramming paste contains polycyclic aromatic hydrocarbon (PAH) and volatile organic compounds (VOC) which create environmental pollution as well as health issue when it is heated around 1000°C or above. This volatile organic compound causes several health issues and even causes cancer.

Volatile organic compounds such as Fluoranthene, Benzo-fluoranthene, Benzo(a)pyrene, Indeno-pyrene, Benzo-perylene, Naphtalene, Acenaphtene, Fluorene, Phenantrene, Pyrene, Benzo-anthracene, Chrysene, Acenaphtylene, Dibenzo-anthracene, Anthracene, and BbNT, are present in coal tar pitch and anthracene oil based ramming paste.

The aging of the coal tar pitch based ramming paste, due to the evaporation of the softeners ensuring its malleability at room temperature, is likely to influence its physical properties. Also, during the compaction of the coal tar pitch based ramming paste, the binder present in its composition releases carcinogenic products such as polycyclic aromatic hydrocarbons, which constitutes a real danger for health. The installation of ramming paste is a heavy operation that could lead to technical and quality issues, as well as health, safety, and environmental issues.

To overcome this problem several eco-friendly cold tamping paste/ramming pastes have been developed to decrease environmental pollution and reduce hazard effect during handling of this material. In recent years, ramming paste producers have developed eco-friendly (EF) products to reduce polycyclic aromatic hydrocarbons (PAH) content. However, the physical properties of these new pastes and their effects on the process efficiency are not yet well known.

A general analysis of the volatile organic compounds of known eco-friendly ramming pastes and coal tar pitch based conventional ramming pastes is shown in table 1 below.

**TABLE 1**

| | Coal tar pitch based Paste | Eco-friendly Paste |
|---|---|---|
| Number of VOC compound present | > 50 | Zero |
| Polycyclic aromatic hydrocarbons (PAH) (mg/kg) | 3000-42000 | < 100 |
| BETEX (mg/kg) | 0.35-0.85 | ∼0.0 |

There is a need for additional environmentally friendly ramming pastes which do not cause health hazard issue during handling and do not release VOC in the environment.

Eterigho-Ikelegbe Orevaoghene et al (Resources, Conservation and Recycling, Vol. 174, 28 June 2021) is a review paper discussing the use of coal as a natural filling agent in the development of coal/polymer composites. US 3381823 A discusses a mixture comprising anthracite coal an epoxy resin. CN 102 010 202 A discusses ramming mixtures comprising calcined anthracite. CN 1 552 788 A discusses high-temperature conductive bonding material comprising calcined anthracite powder.

### SUMMARY OF THE INVENTION

The technical problems to be solved by the invention is that for the production of coal tar pitch and anthracene oil based product, it consumes more energy for the processing because it is being produced at 140-150°C. The processing needs to do at high temperature is due higher softening point of coal tar pitch. At this high temperature, anthracene oil vapor contaminates with environmental.

Therefore, an object of the invention is to provide a novel cold ramming paste for aluminum electrolysis cells which is readily prepared from commercially available materials.

Another object of the invention is to eliminate the use of pitch to reduce the dangerous and consequently damaging emission of gases during the traditional fabrication and calcining of carbon blocks.

The present invention provides an eco-friendly cold ramming paste comprising 88 wt% to 84 wt% of calcined anthracite coal and 12 wt% to 16 wt% of an epoxy resin. In an embodiment, the epoxy resin is selected from a group of polymers consisting of diglycidyl ether of bisphenol-F.

### DESCRIPTION OF THE INVENTION

The invention is defined by the appended claims.

In describing and claiming the invention, the following terminology will be used in accordance with the definitions set forth below. Unless defined otherwise, all technical and scientific terms used herein have the same meaning as commonly understood by one of ordinary skill in the art to which this invention belongs.

As used herein, each of the following terms has the meaning associated with it in this section. Specific and preferred values listed below for individual process parameters, substituents, and ranges are for illustration only; they do not exclude other defined values or other values falling within the preferred defined ranges.

As used herein, the singular forms "a," "an," and "the" include plural reference unless the context clearly dictates otherwise.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention

As used herein, the terms "comprising" "including," "having," "containing," "involving," and the like are to be understood to be open-ended, i.e. to mean including but not limited to.

As used herein, the term "ramming paste or tamping paste" as used herein refers to a thick seam paste which is produced by calcined anthracite coal, graphite powder and calcined petroleum coke, whereas coal tar pitch, anthracene oil and organic molecules are used as binder.

As used herein, the term "volatile organic material" refers to organic compound which have high vapor pressure and less solubility in water. Volatile organic compounds (VOC) include variety of organic compounds which have short and long term adverse health impact during emission.

In the aluminium electrolysis cells, the cathode blocks are sealed with the ramming paste. The main role of this paste is to prevent electrolyte bath and molten aluminium infiltration into the lining and to absorb the thermal expansion of the cathode blocks. The standard cold ramming paste is a mixture of (1) dry aggregate comprising calcined anthracite and artificial graphite and (2) a binder containing coal tar pitch and anthracene oil. Volatile toxic organic compound was found in these ramming paste are in the range of ~3000 mg/kg.

Accordingly, to overcome the drawback of the known ramming paste, the invention provides an eco-friendly cold ramming paste. The ramming paste comprises of (a) calcined anthracite coal and (b) at least one epoxy resin.

The amount of calcined anthracite coal is in the range 88 wt% to 84 wt% and the amount of epoxy resin is in the range of 12 wt% to 16 wt%.

The epoxy resin is selected from a group of polymers consisting of diglycidyl ether of bisphenol-F. The viscosity of the epoxy resin at 25°C (ASTM D2196-05) is in the range of 2 to 5 Pascal Second (2000 to 5000 cP).

The epoxy resin is devoid of contain free monomer and solvent and thus mitigates the risk of monomer and solvents being released during baking of paste under pot operation. The percentage (%) of carbon yield is high as compared to other resin such as acrylic. The use of epoxy resin also increases the crashing strength.

Epoxy resin wet the surface of the calcined anthracene coal easily when the viscosity of this resin is low. The processing temperature of this product is low for the use of low viscosity resin. Low viscosity epoxy resin gives power saving benefits for the production of this ramming paste Three fractions, namely coarse, medium coarse and fine granulometry were used to obtained optimum packing density.

This ECA is used in ramming paste to obtained higher strength, lower porosity, higher thermal shock resistance and higher conductivity as compared calcined petroleum coke. In an embodiment, -3 to -200 mesh particles with particle size 6.7 mm to <75 µm particles of ECA is used. The porosity of this cold ramming paste is in the range of 18-24% and the baked density of the cold ramming paste in the range of 1.40 to 1.54 g/cc. The compressive strength of the cold ramming paste in the range of 180 kg/cm² (minimum).

The electrical resistivity of the cold ramming paste in the range of 70 to 80 µΩm. The coefficient of thermal expansion (ISO 14420) of the cold ramming paste in the range of 3 to 4×10⁻⁶/K. The thermal conductivity (ISO 12987) of the cold ramming paste in the range of 3 to 6 W/mK.

The presence of epoxy resin reduces the volatile organic compounds. Generally volatile toxic organic compound was found in the normal paste ~3000 mg/kg. The use of epoxy resins in present invention is reduces the volatile organic compounds.

Generally, coal tar pitch and anthracene oil based ramming paste is produced at 140-150°C, whereas the ecofriendly ramming paste of present invention is produced at 50-60°C, thereby saving power.

### WORKING EXAMPLES

The following specific examples are illustrative and explanatory of the present invention but are not to be construed as limiting the scope of the invention.

### MATERIAL AND METHODS

ECA (electrical calcined anthracite coal) source China, Epoxy resin supplied by Grasim Chemical, India, Coal tar pitch and anthracene oil source India

### PREPARATION OF ECO-FRIENDLY RAMMING PASTE

The eco-friendly ramming paste preparation was carried out in Kneader. The batch size was fixed 4 kg for the trial. ECA mesh size was fixed from -3 to -200 mesh. The binder was fixed to 12-16%. The coal tar pitch and anthracene oil based sample were prepared conventionally to which 12-16% epoxy resin (Polycyclic aromatic hydrocarbon) was added. The mixture was heated at temperature of 60°C for 15-20 minutes to produce eco-friendly paste.

### RESULT AND DISCUSSION

Properties were measured as per standard procedure in case of both the pastes and the results are given in the table 2, below.

**TABLE 2**

| **Properties** | **UNIT** | **Specification** | **Eco-Friendly Cold Tamping Paste** |
|---|---|---|---|
| Ash | % | 6 Max | 5.53 |
| Plasticity | % | 0-2 | 0 |
| VM | % | 12 Max | 11.11 |
| Fixed carbon | % | 82 Min | 83.37 |
| Baked Properties | | Range | |
| Porosity | % | 18 - 24 | 18-20.5 |
| Apparent density | gm /cc | 1.40 -1.54 | 1.43-1.48 |
| Electrical resistivity | µΩm | 70 -80 | 70.5-79.4 |
| Compressive strength | kg/cm² | 180 min | 216-282 |
| Thermal Conductivity | W/mK | 3 - 6 | 3.92-4.85 |
| Coefficient of Thermal Expansion | 10⁻⁶/K | 3-4 | 3-3.35 |

Higher crashing strength was obtained and all properties are matched the requirement. Coefficient of Thermal Expansion meets the specification, which indicates it should not create extra pressure on pot due to expansion after baking.

The ramming paste of present invention exhibits very high compressive strength as compared to normal paste (180 Kg/cm2). This high compressive strength helps during pot operation which prevents the chances of insertion/penetration of liquid aluminium inside of electrode during operation.

The epoxy resin of the present application is substantially devoid of polycyclic aromatic hydrocarbon (PAH) based free monomer. Hence, no volatile organic compounds were emitted in to the environment.

The above described examples are illustrative in all aspects and do not limit the present disclosure.

### ADVANTAGES:

The ramming paste of present invention is consistent and improves operation, enables longer electrolytic pot life and substantially nil emission of volatiles organic compound (VOC).

The eco-friendly cold ramming paste does not emit any hazard/toxic gases in the environment even at 1000-1200 °C.

Physico-chemical characteristics of the cold ramming paste indicates polycyclic aromatic hydrocarbons (PAH) and volatile organic compounds (VOC) will not emit during paste baking.

During pot operation, the eco-friendly ramming paste will not show any harmful impact on pot preheat, early operation or regular operation performance.

## Claims

1. An eco-friendly cold ramming paste comprising the following by weight percentage:
88 wt% to 84 wt% of calcined anthracite coal; and
12 wt% to 16 wt% of an epoxy resin.

2. The cold ramming paste as claimed in claim 1, wherein said epoxy resin is selected from a group of polymers consisting of diglycidyl ether of bisphenol-F.

3. The cold ramming paste as claimed in any previous claim, wherein the viscosity at 25°C (ASTM D2196-05) of said epoxy resin is in the range of 2 to 5 Pascal Second (2000 to 5000 cP).

4. The cold ramming paste as claimed in any previous claim, wherein particle size of said calcined anthracite coal is in the range of -3 mesh to -200 Tyler mesh.

5. The cold ramming paste as claimed in any previous claim, wherein porosity is in the range of 18-24%.

6. The cold ramming paste as claimed in any previous claim, wherein baked density of the cold ramming paste is in the range of 1.40 to 1.54 g/cc.

7. The cold ramming paste as claimed in any previous claim, wherein compressive strength of the cold ramming paste is 180 kg/cm² (min.).

8. The cold ramming paste as claimed in any previous claim, wherein electrical resistivity of the cold ramming paste is in the range of 70 to 80 µΩm.

9. The cold ramming paste as claimed in any previous claim, wherein coefficient of thermal expansion (ISO14420) of the cold ramming paste is in the range of 3 to 4×10⁻⁶/K.

10. The cold ramming paste as claimed in any previous claim, wherein Thermal Conductivity (ISO12987) of the cold ramming paste is in the range of 3 to 6 W/mK.

## Patentansprüche

1. Umweltfreundliche Kaltstampfpaste, umfassend Folgendes in Gewichtsprozent:
88 Gew.-% bis 84 Gew.-% an kalzinierter Anthrazitkohle; und
12 Gew.-% bis 16 Gew.-% an einem Epoxyharz.

2. Kaltstampfpaste gemäß Anspruch 1, wobei das Epoxyharz ausgewählt ist aus einer Gruppe von Polymeren bestehend aus Diglycidylether von Bisphenol-F.

3. Kaltstampfpaste gemäß einem der vorstehenden Ansprüche, wobei die Viskosität bei 25 °C (ASTM D2196-05) des Epoxyharzes in dem Bereich von 2 bis 5 Pascalsekunden (2000 bis 5000 cP) liegt.

4. Kaltstampfpaste gemäß einem der vorstehenden Ansprüche, wobei die Partikelgröße der kalzinierten Anthrazitkohle in dem Bereich von -3 Mesh bis -200 Tyler-Mesh liegt.

5. Kaltstampfpaste gemäß einem der vorstehenden Ansprüche, wobei die Porosität in dem Bereich von 18-24 % liegt.

6. Kaltstampfpaste gemäß einem der vorstehenden Ansprüche, wobei die Dichte der gebrannten Kaltstampfpaste in dem Bereich von 1,40 bis 1,54 g/cc liegt.

7. Kaltstampfpaste gemäß einem der vorstehenden Ansprüche, wobei die Druckfestigkeit der Kaltstampfpaste 180 kg/cm² (min.) beträgt.

8. Kaltstampfpaste gemäß einem der vorstehenden Ansprüche, wobei der spezifische elektrische Widerstand der Kaltstampfpaste in dem Bereich von 70 bis 80 µΩm liegt.

9. Kaltstampfpaste gemäß einem der vorstehenden Ansprüche, wobei der Wärmeausdehnungskoeffizient (ISO 14420) der Kaltstampfpaste in dem Bereich von 3 bis 4×10⁻⁶/K liegt.

10. Kaltstampfpaste gemäß einem der vorstehenden Ansprüche, wobei die Wärmeleitfähigkeit (ISO12987) der Kaltstampfpaste in dem Bereich von 3 bis 6 W/mK liegt.

## Revendications

1. Pâte de pilonnage à froid respectueuse de l'environnement comprenant ce qui suit en pourcentage en poids :
88 % en poids à 84 % en poids de charbon d'anthracite calciné ; et
12 % en poids à 16 % en poids d'une résine époxy.

2. Pâte de pilonnage à froid selon la revendication 1, dans laquelle ladite résine époxy est sélectionnée dans un groupe de polymères constitué par l'éther de diglycidyle de bisphénol F.

3. Pâte de pilonnage à froid selon une quelconque revendication précédente, dans laquelle la viscosité à 25 °C (ASTM D2196-05) de ladite résine époxy est dans la plage de 2 à 5 Pascal seconde (2 000 à 5 000 cP).

4. Pâte de pilonnage à froid selon une quelconque revendication précédente, dans laquelle la taille de particule dudit charbon anthracite calciné est dans la plage de -3 mesh à -200 mesh Tyler.

5. Pâte de pilonnage à froid selon une quelconque revendication précédente, dans laquelle la porosité est dans la plage de 18 à 24 %.

6. Pâte de pilonnage à froid selon une quelconque revendication précédente, dans laquelle la densité cuite de la pâte de pilonnage à froid est dans la plage de 1,40 à 1,54 g/cc.

7. Pâte de pilonnage à froid selon une quelconque revendication précédente, dans laquelle la résistance à la compression de la pâte de pilonnage à froid est de 180 kg/cm² (min.).

8. Pâte de pilonnage à froid selon une quelconque revendication précédente, dans laquelle la résistivité électrique de la pâte de pilonnage à froid est dans la plage de 70 et 80 µΩm.

9. Pâte de pilonnage à froid selon une quelconque revendication précédente, dans laquelle le coefficient de dilatation thermique (norme ISO 14420) de la pâte de pilonnage à froid est dans la plage de 3 à 4 x 10⁻⁶/K.

10. Pâte de pilonnage à froid selon une quelconque revendication précédente, dans laquelle la conductivité thermique (norme ISO 12987) de la pâte de pilonnage à froid est dans la plage de 3 à 6 W/mK.
